# EUROPEAN PATENT APPLICATION

(11) **EP 4 697 751 A1**
(43) Date of publication of application: **18.02.2026**
(21) Application number: 25191554.2
(22) Date of filing: 24.07.2025
(51) Int. Cl.: H04R 3/12, H04R 27/00

(54) **METHOD FOR AUDIO PLAYBACK DEVICE AND AUDIO PLAYBACK SYSTEM**

(30) Priority: 12.08.2024 CN 202411101154
(71) Applicant: Harman International Industries, Inc., Stamford, Connecticut 06901 (US)
(72) Inventor: YOU, Caihui, Shenzen, 518067 (CN); LI, Dongcheng, Shenzen, 518067 (CN)
(74) Representative: Kraus & Lederer PartGmbB

(57) **Abstract**

One or more embodiments of the present disclosure provide a method for an audio playback device, an audio playback device, an audio playback system, and a computer-readable storage medium, where the method for a first audio playback device includes: connecting with an audio acquisition device and at least one second audio playback device; sending connection information of the first audio playback device with the audio acquisition device to the at least one second audio playback device for the second audio playback device to receive, based at least on the connection information, an audio acquisition signal sent by the audio acquisition device; receiving the audio acquisition signal sent by the audio acquisition device; and playing first audio corresponding to the audio acquisition signal synchronously with the at least one second audio playback device. The method for an audio playback device according to the present disclosure can reduce delay between sound propagated through air and sound propagated after being processed by an audio acquisition device and an audio playback device, thereby improving auditory experience of a user.

## Description

### Technical Field

The present disclosure relates to fields such as audio processing and electronic information, and more particularly, relates to a method for an audio playback device, an audio playback device, an audio playback system, and a computer-readable storage medium.

### Background

As people's requirements for audio playback quality become increasingly higher, a single audio playback device often has limited performance and cannot provide users with rich audiovisual experience. Therefore, it is necessary to connect a plurality of audio playback devices and utilize multi-device audio playback techniques to enhance users' auditory experience.

By utilizing multi-device audio playback techniques to process audio for each audio playback device, a plurality of audio playback devices can synchronously play audio and thus can provide users with richer and more flexible audio experience in application scenarios such as home entertainment, commercial displays, and conferences. For example, in home environments, users can connect audio source devices such as mobile phones and computers to a plurality of loudspeakers or speakers to achieve whole-house synchronized audio playback. This can not only enhance home entertainment experience but also allow adjustment of volume and sound effects according to the room size and layout. In scenarios such as shopping malls and exhibitions, multi-device audio playback techniques can synchronously transmit audio content such as background music and product introductions to a plurality of audio sound devices. This helps to create a unified atmosphere and presentation effect, attracting customers' attention and enhancing brand image. In conference or speech scenarios, multi-device audio playback techniques can ensure that participants clearly hear the speaker's voice from different locations. By configuring a plurality of audio sound devices and adjusting volume and sound effects, conference efficiency and quality can be improved and noise interference can be reduced.

For an application scenario where an audio signal is acquired through an audio acquisition device and the acquired audio signal is sent to a plurality of audio playback devices such that audio corresponding to the acquired audio signal is played through the plurality of audio playback devices, delay between sound propagated through air and sound propagated after being processed by the audio acquisition device and the audio playback devices is relatively large, and audio output from the plurality of audio playback devices is prone to asynchrony. Therefore, when utilizing a plurality of audio playback devices to play audio, how to ensure synchronization of sound played by the audio playback devices and reduce sound delay to enhance users' auditory experience is currently one of key research focuses in the field of audio processing.

### Summary

In order to enhance users' auditory experience, the present disclosure provides a method for a first audio playback device, including: connecting with an audio acquisition device and at least one second audio playback device; sending connection information of the first audio playback device with the audio acquisition device to the at least one second audio playback device for the at least one second audio playback device to receive, based at least on the connection information, an audio acquisition signal sent by the audio acquisition device; receiving the audio acquisition signal sent by the audio acquisition device; and playing first audio corresponding to the audio acquisition signal synchronously with the at least one second audio playback device.

According to one or more embodiments of the present disclosure, the method further includes: obtaining packet guiding information indicating the audio acquisition signal, and sending the packet guiding information to the at least one second audio playback device for the at least one second audio playback device to receive, based on the connection information and the packet guiding information, the audio acquisition signal sent by the audio acquisition device.

According to one or more embodiments of the present disclosure, the method further includes: sending an audio playback instruction to the at least one second audio playback device, where the audio playback instruction is used to instruct the at least one second audio playback device to play second audio synchronously with the first audio playback device, where the first audio is audio acquired in real time by the audio acquisition device, and the second audio is pre-recorded audio; and playing the second audio synchronously with the first audio playback device.

According to one or more embodiments of the present disclosure, playing first audio corresponding to the audio acquisition signal synchronously with the at least one second audio playback device includes: adjusting the audio acquisition signal according to characteristics of the first audio playback device, and playing the first audio based on the adjusted audio acquisition signal, where the characteristics of the first audio playback device include at least one of a frequency response of the first audio playback device or an audio channel corresponding to the first audio playback device.

According to one or more embodiments of the present disclosure, the first audio playback device and the at least one second audio playback device are evenly arranged in a space, the method further including: obtaining first setup information of the first audio playback device; and sending the first setup information of the first audio playback device to the at least one second audio playback device for the at least one second audio playback device to determine second setup information of the at least one second audio playback device based on the first setup information.

One or more embodiments of the present disclosure further provide a method for a second audio playback device, including: connecting with a first audio playback device; receiving connection information of the first audio playback device with an audio acquisition device from the first audio playback device; receiving, based at least on the connection information, an audio acquisition signal sent by the audio acquisition device; and playing first audio corresponding to the audio acquisition signal synchronously with the first audio playback device.

One or more embodiments of the present disclosure further provide a first audio playback device, including: a connection module configured to: connect with an audio acquisition device and at least one second audio playback device; a sending module configured to: send connection information of the first audio playback device with the audio acquisition device to the at least one second audio playback device for the at least one second audio playback device to receive, based at least on the connection information, an audio acquisition signal sent by the audio acquisition device; a receiving module configured to: receive the audio acquisition signal sent by the audio acquisition device; and a playback module configured to: play first audio corresponding to the audio acquisition signal synchronously with the at least one second audio playback device.

One or more embodiments of the present disclosure further provide a second audio playback device, including: a connection module configured to: connect with a first audio playback device; a receiving module configured to: receive connection information of the first audio playback device with audio acquisition device from the first audio playback device; and receive, based at least on the connection information, an audio acquisition signal sent by the audio acquisition device; and a playback module configured to: play first audio corresponding to the audio acquisition signal synchronously with the first audio playback device.

One or more embodiments of the present disclosure further provide an audio playback system, including: an audio acquisition device; a first audio playback device; and at least one second audio playback device, where the first audio playback device is connected to the audio acquisition device and the at least one second audio playback device, the first audio playback device sends connection information of the first audio playback device with the audio acquisition device to the at least one second audio playback device, such that the second audio playback device receives, based at least on the connection information, an audio acquisition signal sent by the audio acquisition device; the first audio playback device plays first audio corresponding to the audio acquisition signal synchronously with the at least one second audio playback device.

One or more embodiments of the present disclosure further provide a computer program product, the computer program product including computer software code, where the computer software code, when run by a processor, provides the aforementioned method.

One or more embodiments of the present disclosure further provide a computer-readable storage medium having computer-executable instructions stored thereon, where the instructions, when executed by a processor, provide the aforementioned method.

The method for an audio playback device according to the present disclosure can, for an application scenario where an audio signal is acquired through an audio acquisition device and the acquired audio signal is sent to a plurality of audio playback devices such that audio corresponding to the acquired audio signal is played through the plurality of audio playback devices, reduce delay between sound propagated through air and sound propagated after being processed by the audio acquisition device and the audio playback devices, and ensure synchronization of sound played by the audio playback devices, thereby improving users' auditory experience.

### Brief Description of the Drawings

In order to more clearly illustrate technical solutions of embodiments of the present disclosure, drawings used in the description of the embodiments will be briefly introduced below. Obviously, the drawings in the following description are merely some exemplary embodiments of the present disclosure, and for those of ordinary skill in the art, other drawings can also be obtained according to these drawings without creative labor.

Herein, in the drawings:
FIGS. 1A and 1B are schematic diagrams illustrating application scenarios according to one or more examples;
FIGS. 1C and 1D are schematic diagrams illustrating application scenarios according to one or more embodiments of the present disclosure;
FIGS. 2A and 2B are schematic flowcharts illustrating methods for an audio playback device according to one or more embodiments of the present disclosure;
FIG. 3 is a schematic diagram illustrating an information processing process of an audio playback device according to one or more embodiments of the present disclosure; and
FIGS. 4A and 4B are schematic diagrams illustrating the compositions of audio playback devices according to one or more embodiments of the present disclosure.

### Detailed Description

In order to make objectives, technical solutions, and advantages of the present disclosure more apparent, exemplary embodiments according to the present disclosure will be described in detail below with reference to the accompanying drawings. Obviously, the described embodiments are merely a part of embodiments of the present disclosure rather than all embodiments of the present disclosure, and it should be understood that the present disclosure is not limited by the exemplary embodiments described herein.

Moreover, in this specification and the accompanying drawings, substantially same or similar steps and elements are represented by same or similar reference numerals, and repeated descriptions of these steps and elements will be omitted.

Moreover, in this specification and the accompanying drawings, according to embodiments, elements are described in singular or plural forms. However, singular and plural forms are appropriately selected for proposed situations merely for convenience of explanation without intention to limit the present disclosure thereto. Therefore, singular forms may include plural forms, and plural forms may also include singular forms, unless explicitly stated otherwise in the context.

Moreover, in this specification and the accompanying drawings, the involved terms "first/second" merely distinguish similar objects and do not represent specific ordering for objects, understandably, "first/second" may interchange specific sequences or orders under allowable circumstances, such that one or more embodiments of the present disclosure described herein can be implemented in orders other than those illustrated or described herein.

Moreover, in this specification and the accompanying drawings, unless explicitly stated otherwise, "connected" does not necessarily mean "directly connected" or "directly contacted". Herein, "connected" can mean either fixedly connected or electrically connected.

One or more embodiments of the present disclosure will be further described below in conjunction with the accompanying drawings.

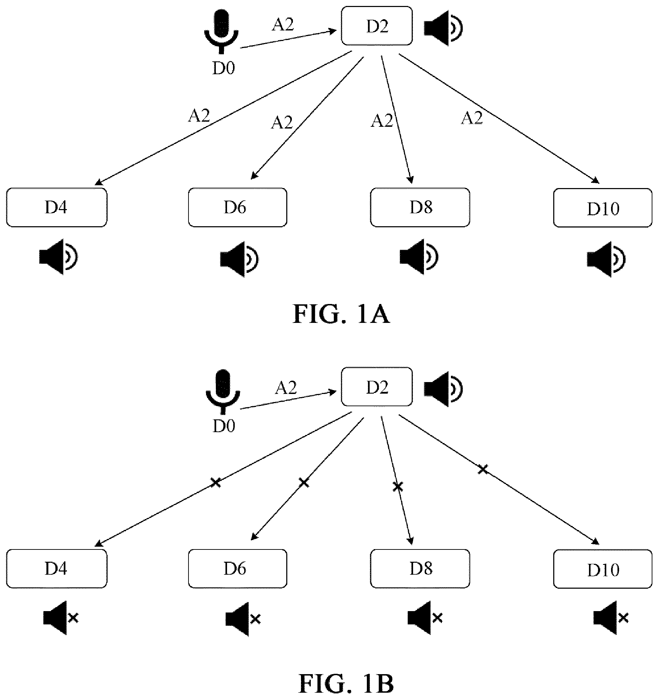

FIG. 1A is a schematic diagram illustrating an application scenario according to one or more examples. As shown in FIG. 1A, a primary audio playback device D2 (e.g., a loudspeaker, a speaker, etc.) may be connected to an audio acquisition device D0 (e.g., a microphone, a voice recorder pen, etc.) to receive an audio acquisition signal A2 from the audio acquisition device D0 (in FIG. 1A, all solid-line arrows represent propagation directions of the audio acquisition signal A2). Optionally, the primary audio playback device D2 may be connected to the audio acquisition device D0 in a wireless manner. Further, the primary audio playback device D2 may play audio corresponding to the audio acquisition signal A2 based on the received audio acquisition signal A2.

Since a single primary audio playback device D2 has limited performance and cannot provide users with rich audiovisual experience, the primary audio playback device D2 can be connected to a plurality of secondary audio playback devices (e.g., secondary audio playback devices D4, D6, D8, and D10 in FIG. 1A) to play audio together. In FIG. 1A, four secondary audio playback devices D4, D6, D8, and D10 are taken as examples for illustration rather than limitation; in reality, the number of secondary audio playback devices may be one or more. To reduce the number of wired cables, the primary audio playback device D2 can be connected to the plurality of secondary audio playback devices through wireless manners such as Bluetooth, WiFi, radio communication. The plurality of secondary audio playback devices may receive the audio acquisition signal forwarded by the primary audio playback device D2 to play audio corresponding to the audio acquisition signal.

While sound enters the audio acquisition device D0, it also directly enters the user's ears through air (without processing by the audio acquisition device and audio playback devices). For example, when a speaker speaks through a microphone, an audience not only hears sound processed by the microphone and loudspeaker, but also hears sound directly propagated through air. However, it is difficult to synchronize the sound directly propagated to the user through air and the sound propagated to the user through the plurality of secondary audio playback devices. Typically, if the delay between a plurality of sounds exceeds a specific delay threshold (e.g., 30 ms), the user will distinctly perceive the sounds as separated. In the application scenario illustrated in FIG. 1A, it is often difficult to keep the delay between sound played through the secondary audio playback devices and sound propagated through air below the delay threshold. Consequently, the user may perceive sounds heard through different methods (or devices) as separated; for example, the sound heard through secondary audio playback devices has a noticeable delay compared to sound heard through air propagation, or the sound played by the primary audio playback device is out of sync with that played by the secondary audio playback devices, thereby affecting the user's auditory experience.

To address the sound delay issue in the application scenario illustrated in FIG. 1A, audio may be played through the approach shown in FIG. 1B. In FIG. 1B, functions and connection relationships of the audio acquisition device D0 and the audio playback devices (including the primary audio playback device D2 and the plurality of secondary audio playback devices D4, D6, D8, and D10) are similar to those in FIG. 1A. In contrast, in the application scenario in FIG. 1A, after the primary audio playback device D2 receives the audio acquisition signal A2 sent by the audio acquisition device D0, it forwards the audio acquisition signal A2 to each secondary audio playback device, and the primary audio playback device D2 and the secondary audio playback devices both play audio corresponding to the audio acquisition signal A2; whereas in the application scenario in FIG. 1B, after the primary audio playback device D2 receives the audio acquisition signal A2 sent by the audio acquisition device D0, it does not forward the audio acquisition signal A2 to the secondary audio playback devices (that is, only the primary audio playback device D2 plays audio corresponding to the audio acquisition signal A2). Since delay between sound played through the primary audio playback device D2 and sound propagated through air can be less than a delay threshold, the user will not feel that sounds heard through different approaches are separated. However, in the application scenario shown in FIG. 1B, only one audio playback device plays the sound (even if the primary audio playback device D2 can play audio at maximum volume), which often cannot meet user's requirements for the volume of the played sound or provide users with rich audiovisual experience.

Through the descriptions with respect to FIGS. 1A and 1B, it can be seen that a single audio playback device often has limited performance and cannot provide users with rich audiovisual experience. Therefore, it is necessary to connect a plurality of audio playback devices and utilize multi-device audio playback techniques to enhance users' auditory experience. However, for an application scenario where an audio signal is acquired through an audio acquisition device and the acquired audio signal is sent to a plurality of audio playback devices such that audio corresponding to the acquired audio signal is played through the plurality of audio playback devices, delay between sound propagated through air and sound propagated after being processed by the audio acquisition device and the audio playback devices is relatively large, and audio output from the audio playback devices (including the primary audio playback device and the plurality of secondary audio playback devices) is prone to asynchrony.

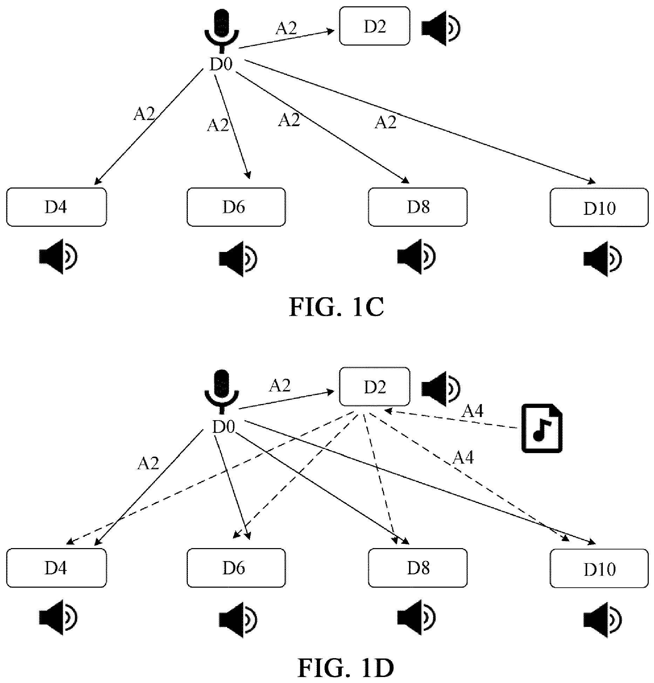

Therefore, the present disclosure proposes that audio may be played through the approach shown in FIG. 1C.

As shown in FIG. 1C, a primary audio playback device D2 (e.g., a loudspeaker, a speaker, etc.) can be connected to an audio acquisition device D0 (e.g., a microphone, a voice recorder pen, etc.) to receive an audio acquisition signal A2 from the audio acquisition device D0. Further, the primary audio playback device D2 may play audio corresponding to the audio acquisition signal A2 based on the received audio acquisition signal A2 (in FIG. 1C, all solid-line arrows represent propagation directions of the audio acquisition signal A2).

The primary audio playback device D2 may also be connected to a plurality of secondary audio playback devices and send connection information of the primary audio playback device D2 with the audio acquisition device D0 to the plurality of secondary audio playback devices, such that the plurality of secondary audio playback devices can receive, based at least on the connection information, the audio acquisition signal A2 sent by the audio acquisition device D0. Thus, the plurality of secondary audio playback devices may also play audio corresponding to the audio acquisition signal A2 based on the received audio acquisition signal A2. Since in the application scenario shown in FIG. 1C, the plurality of secondary audio playback devices directly receive the audio acquisition signal A2 from the audio acquisition device D0 rather than receiving the audio acquisition signal A2 forwarded via the primary audio playback device D2, delays between sounds played through the audio playback devices and sound propagated through air are all less than a delay threshold (e.g., 30 ms), and the user will not feel that sounds heard through different approaches are separated.

Further, on the basis of FIG. 1C, audio may also be played through the approach shown in FIG. 1D. For clarity, only part of the audio acquisition signal A2 and the audio signal A4 corresponding to pre-recorded audio are marked in FIG. 1D. In reality, in FIG. 1D, all solid-line arrows represent propagation directions of the audio acquisition signal A2, and all dashed-line arrows represent propagation directions of the audio signal A4 corresponding to the pre-recorded audio. That is, after the primary audio playback device D2 receives the audio signal A4 corresponding to the pre-recorded audio, it may play the pre-recorded audio based on the audio signal A4 corresponding to the pre-recorded audio. Meanwhile, the primary audio playback device D2 may forward the audio signal A4 corresponding to the pre-recorded audio to the plurality of secondary audio playback devices, such that the secondary audio playback devices also play the pre-recorded audio.

Since while audio acquired in real time through the audio acquisition device enters the audio acquisition device, it also enters the user's ears directly through the air simultaneously (without being processed by the audio acquisition device and the audio playback devices), playing the audio according to the approach of FIG. 1A tends to make the user feel that sounds heard through different approaches are separated. The pre-recorded audio will not be directly propagated through air and is all output as sound after being processed by audio playback devices. Therefore, in a case where the primary audio playback device D2 forwards the audio signal A4 corresponding to the pre-recorded audio to the plurality of secondary audio playback devices, through certain time synchronization settings, the user can be made to not feel obvious sound delay.

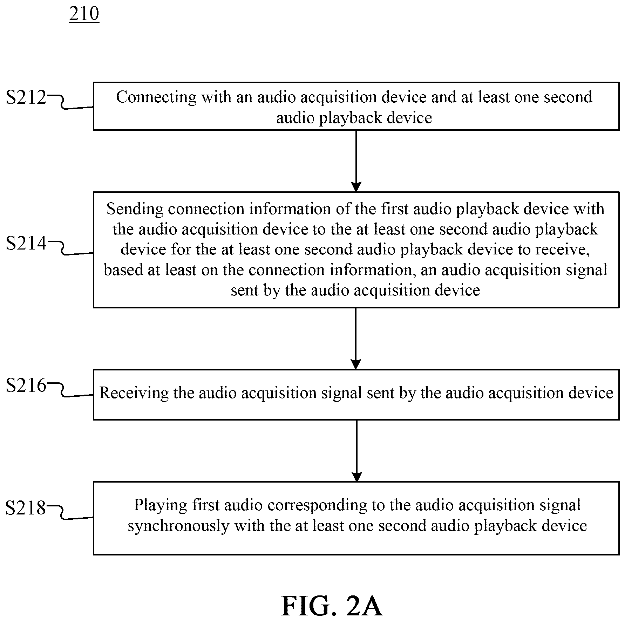

FIG. 2A is a schematic flowchart illustrating a method 210 for a first audio playback device according to one or more embodiments of the present disclosure.

In step S212, the first audio playback device is connected to an audio acquisition device and at least one second audio playback device.

According to one or more embodiments of the present disclosure, the audio acquisition device may be a microphone, a voice recorder pen, and the like of various models or structures, and the first audio playback device and the second audio playback device may be loudspeakers, audio sound systems, speakers, and the like of various models or structures. The performance of the first audio playback device and the second audio playback device may be the same or different. The first audio playback device may be a primary audio playback device, and the second audio playback device may be a secondary audio playback device. Optionally, the first audio playback device used as the primary audio playback device may have higher performance than the second audio playback device used as the secondary audio playback device.

In order to reduce the number of wired cables to reduce costs, the primary audio playback device may be connected to the audio acquisition device and/or the at least one second audio playback device through wireless manners such as Bluetooth, WiFi, or radio communication.

In step S214, the first audio playback device may send connection information of the first audio playback device with the audio acquisition device to the at least one second audio playback device for the at least one second audio playback device to receive, based at least on the connection information, an audio acquisition signal sent by the audio acquisition device.

According to one or more embodiments of the present disclosure, the connection information may include information related to device identification of the first audio playback device, information related to device identification of the audio acquisition device, information related to a communication protocol between the first audio playback device and the audio acquisition device, and the like. Optionally, the connection information may include information related to the model of the first audio playback device, information related to the model of the audio acquisition device, and the like.

According to one or more embodiments of the present disclosure, the first audio playback device may further obtain packet guiding information indicating the audio acquisition signal, and send the packet guiding information to the at least one second audio playback device for the at least one second audio playback device to receive, based on the connection information and the packet guiding information, the audio acquisition signal sent by the audio acquisition device. The packet guiding information may include an identifier of the audio acquisition signal, decoding information of the audio acquisition signal, and the like. By enabling the at least one second audio playback device to receive, based on the connection information and the packet guiding information, the audio acquisition signal sent by the audio acquisition device, the security and the accuracy in receiving the audio acquisition signal by the at least one second audio playback device can be improved.

In step S216, the first audio playback device receives the audio acquisition signal sent by the audio acquisition device.

According to one or more embodiments of the present disclosure, the first audio playback device may receive the audio acquisition signal broadcast by the audio acquisition device. That is, the audio acquisition device may send the audio acquisition signal in a broadcast manner, and the audio playback devices (including the first audio playback device and the at least one second audio playback device) need only to rely on the aforementioned connection information to receive the audio acquisition signal broadcast by the audio acquisition device (that is, the aforementioned connection information is equivalent to a key for broadcast communication with the audio acquisition device).

In other words, in step S212, when the first audio playback device is connected to the audio acquisition device, the two may communicate in a point-to-point manner. After the connection information of the first audio playback device with the audio acquisition device is sent to the at least one second audio playback device via step S214, broadcast communication is adopted between the audio acquisition device and each audio playback device. Through this approach, complicated point-to-point communication verification between the audio acquisition device and each second audio playback device can be avoided, thereby improving communication efficiency.

In step S218, the first audio playback device plays first audio corresponding to the audio acquisition signal synchronously with the at least one second audio playback device.

According to one or more embodiments of the present disclosure, the first audio playback device may adjust the audio acquisition signal according to characteristics of the first audio playback device, and play the first audio based on the adjusted audio acquisition signal, where the characteristics of the first audio playback device include at least one of a frequency response of the first audio playback device or an audio channel corresponding to the first audio playback device. Optionally, frequency domain analysis may be used to perform different adjustments on the gain, the phase, and the like of the first audio with respect to different frequency bands. Through this adjustment, characteristics of the first audio playback device can be fully considered, such that the first audio can be played with highest possible quality. Optionally, this adjustment process may be implemented either through hardware or through software.

According to one or more embodiments of the present disclosure, the first audio playback device may further send an audio playback instruction to the at least one second audio playback device, and play the second audio synchronously with the at least one second audio playback device, where the audio playback instruction is used to instruct the at least one second audio playback device to play the second audio synchronously with the first audio playback device, where the first audio is audio acquired in real time by the audio acquisition device, and the second audio is pre-recorded audio. As described above for FIG. 1D, the at least one second audio playback device directly receives the audio acquisition signal from the audio acquisition device rather than receiving the audio acquisition signal forwarded via the first audio playback device; therefore, the user will not feel delay and misalignment between sounds heard through different manners (that is, sounds played through the audio playback devices and the sound propagated through air). The pre-recorded audio will not be directly propagated through air and is all output as sound after being processed by audio playback devices. Therefore, in a case where the first audio playback device forwards the audio signal A4 corresponding to the pre-recorded audio to the at least one second audio playback device, the user will also not feel sound delay and misalignment.

According to one or more embodiments of the present disclosure, the first audio playback device and the at least one second audio playback device may be evenly arranged in the space to enhance the user's immersive auditory experience.

According to one or more embodiments of the present disclosure, the first audio playback device may further obtain first setup information of the first audio playback device; and send the first setup information of the first audio playback device to the at least one second audio playback device for the at least one second audio playback device to determine second setup information of the at least one second audio playback device based on the first setup information. Optionally, settings at the first audio playback device may affect settings at all second audio playback devices, while settings at each second audio playback device do not affect settings at the first audio playback device or settings at other second audio playback devices. This approach enables more efficient and accurate settings of functions, performance, and other aspects of each audio playback device.

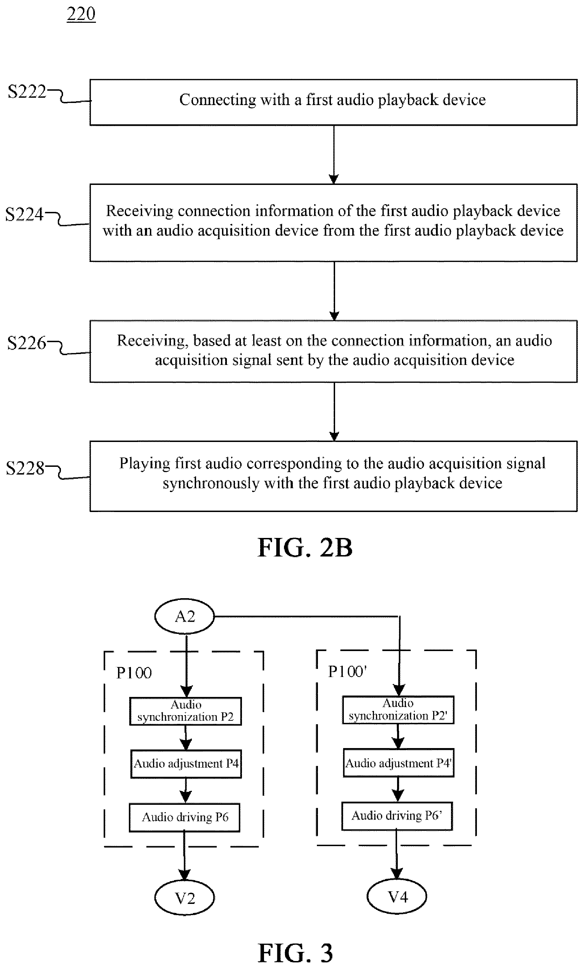

FIG. 2B is a schematic flowchart illustrating a method 220 for a second audio playback device according to one or more embodiments of the present disclosure.

In step S222, the second audio playback device is connected to the first audio playback device.

According to one or more embodiments of the present disclosure, the second audio playback device may be connected to the first audio playback device through wireless manners such as Bluetooth, WiFi, or radio communication. The first audio playback device may be a primary audio playback device, and the second audio playback device may be a secondary audio playback device.

In step S224, the second audio playback device receives connection information of the first audio playback device with an audio acquisition device from the first audio playback device.

According to one or more embodiments of the present disclosure, the connection information may include information related to device identification of the first audio playback device, information related to device identification of the audio acquisition device, information related to a communication protocol between the first audio playback device and the audio acquisition device, and the like. Optionally, the connection information may include information related to the model of the first audio playback device, information related to the model of the audio acquisition device, and the like.

According to one or more embodiments of the present disclosure, the second audio playback device may further receive packet guiding information indicating the audio acquisition signal from the first audio playback device; and receive, based on the connection information and the packet guiding information, the audio acquisition signal sent by the audio acquisition device. This approach can improve the security and accuracy in receiving the audio acquisition signal by the at least one second audio playback device.

In step S226, the second audio playback device receives, based at least on the connection information, an audio acquisition signal sent by the audio acquisition device.

According to one or more embodiments of the present disclosure, the second audio playback device may receive the audio acquisition signal broadcast by the audio acquisition device. That is, the second audio playback device may obtain the audio acquisition signal through broadcast communication without establishing a point-to-point connection with the audio acquisition device, where the aforementioned connection information is equivalent to the key for broadcast communication with the audio acquisition device.

In step S228, the second audio playback device plays first audio corresponding to the audio acquisition signal synchronously with the first audio playback device.

According to one or more embodiments of the present disclosure, the second audio playback device may adjust the audio acquisition signal according to characteristics of the second audio playback device, and play the first audio based on the adjusted audio acquisition signal, where the characteristics of the second audio playback device include at least one of a frequency response of the second audio playback device or an audio channel corresponding to the second audio playback device. Optionally, frequency domain analysis may be used to perform different adjustments on the gain, the phase, and the like of the first audio with respect to different frequency bands. Through this adjustment, characteristics of the second audio playback device can be fully considered, such that the first audio can be played with highest possible quality. Optionally, this adjustment process may be implemented either through hardware or through software.

According to one or more embodiments of the present disclosure, the second audio playback device may further receive an audio playback instruction from the first audio playback device, and play the second audio synchronously with the first audio playback device, where the audio playback instruction is used to instruct the second audio playback device to play second audio synchronously with the first audio playback device, where the first audio is audio acquired in real time by the audio acquisition device, and the second audio is pre-recorded audio.

Since the at least one second audio playback device directly receives the audio acquisition signal from the audio acquisition device rather than receiving the audio acquisition signal forwarded via the first audio playback device, the user will not feel delay and misalignment between sounds heard through different manners (that is, sounds played through the audio playback devices and the sound propagated through air). The pre-recorded audio will not be directly propagated through air and is all output as sound after being processed by audio playback devices. Therefore, in a case where the first audio playback device forwards the audio signal corresponding to the pre-recorded audio to the at least one second audio playback device, the user will also not feel sound delay and misalignment.

According to one or more embodiments of the present disclosure, the audio playback instruction may include a start playback time of the second audio. During a process in which the second audio playback device plays the second audio synchronously with the first audio playback device, the second audio playback device may obtain a time at which the second audio playback device receives the audio playback instruction; and play audio synchronously with the first audio playback device based on the start playback time of the second audio and the time at which the second audio playback device receives the audio playback instruction.

As an example, in a case where the time at which the second audio playback device receives the audio playback instruction is earlier than the start playback time of the second audio, the second audio playback device may play the second audio at the start playback time of the second audio. For example, assuming that the time at which the second audio playback device receives the second audio playback instruction is 9:00:00, and the start playback time of the second audio is 9:00:02, then the second audio playback device may play the second audio at 9:00:02. In a case where the time at which the second audio playback device receives the second audio playback instruction is later than the start playback time of the second audio by a first time period, the second audio playback device may skip a front portion of the second audio that has a duration of the first time period and directly play the remaining portion of the second audio. For example, assuming that the time at which the second audio playback device receives the second audio playback instruction is 9:00:02, and the start playback time of the second audio is 9:00:00, then the second audio playback device may skip the first 2-second portion of the second audio and directly play the remaining portion of the second audio; that is, assuming that the second audio has a length of 10 seconds, the second audio is played from the third second of the second audio. This approach can enhance synchronization between the second audio playback device and the first audio playback device in playing the second audio.

According to one or more embodiments of the present disclosure, during the process in which the second audio playback device plays the second audio synchronously with the first audio playback device, it may further obtain the number of unit audio segments that the first audio playback device has already played by the time when the second audio playback device receives the audio playback instruction; and in a case where the first audio playback device has played a first number of unit audio segments, after deleting a front first number of unit audio segments in the second audio, play the remaining portion of the second audio.

For example, assuming that the audio sampling rate of the first audio playback device is 48 kHz, meaning that the playback speed of each unit audio segment is 1/48K, approximately 20.8 µs. Then, in a case where the first audio playback device has played 1,000 unit audio segments, the time required is 20,800 µs. If the second audio playback device has played only 900 unit audio segments during the same 20,800 µs period, it can be determined that the playback speed of the second audio playback device is lower than the playback speed of the first audio playback device. In this case, the audio sampling rate of the second audio playback device may be increased to ensure that the second audio playback device plays the audio synchronously with the first audio playback device. Additionally, if the first audio playback device has already played 1,000 unit audio segments by the time when the second audio playback device receives the audio playback instruction, the first 1,000 unit audio segments in the second audio may be deleted, and the remaining portion of the second audio may be played to ensure that the second audio playback device plays the second audio synchronously with the first audio playback device. This approach can enhance synchronization between the second audio playback device and the first audio playback device in playing the second audio.

According to one or more embodiments of the present disclosure, the second audio playback device may further receive first setup information of the first audio playback device from the first audio playback device; and determine second setup information of the second audio playback device based on the first setup information; and play the first audio based on the second setup information.

Optionally, settings at the first audio playback device may affect settings at all second audio playback devices, while settings at each second audio playback device do not affect settings at the first audio playback device or settings at other second audio playback devices. This approach enables more efficient and accurate settings of functions, performance, and other aspects of each audio playback device.

FIG. 3 is a schematic diagram illustrating an information processing process of an audio playback device according to one or more embodiments of the present disclosure. In FIG. 3, solid-line arrows represent processing flows for audio signals.

As shown in FIG. 3, after a first audio playback device (that is, a primary audio playback device) receives an audio acquisition signal A2 sent by an audio acquisition device, the audio acquisition signal A2 may be processed through processing P100 at the first audio playback device, and then the processed audio V2 may be output by the first audio playback device. After a second audio playback device (that is, a secondary audio playback device) receives the audio acquisition signal A2 sent by the audio acquisition device, the audio acquisition signal A2 may be processed through processing P100' at the second audio playback device, and then the processed audio V4 may be output by the second audio playback device. By simultaneously listening to the audio V2 processed by the first audio playback device and the audio V4 processed by the second audio playback device, a user can obtain a better immersive experience.

More specifically, the processing P100 at the first audio playback device may include audio synchronization P2, audio adjustment P4, and audio driving P6. The processing P100' at the second audio playback device may include audio synchronization P2', audio adjustment P4', and audio driving P6'.

According to one or more embodiments of the present disclosure, in an audio synchronization process (that is, audio synchronization P2 and audio synchronization P2' shown in FIG. 3), the first audio playback device and the second audio playback device may synchronize audio playback information through separate communication with the audio acquisition device to achieve synchronous playback of the audio. Optionally, the first audio playback device and the second audio playback device may further synchronize audio playback information through communication between themselves (e.g., sending an audio playback instruction to the second audio playback device via the first audio playback device), thereby achieving synchronous playback of the audio.

During the audio adjustment P4 process, the first audio playback device may adjust the audio acquisition signal according to characteristics of the first audio playback device, and play the audio based on the adjusted audio acquisition signal, where the characteristics of the first audio playback device include at least one of a frequency response of the first audio playback device and an audio channel corresponding to the first audio playback device (including the number of audio channels, types of audio channels (e.g., high-frequency audio channel, low-frequency audio channel), and the like).

In a case of adjusting the audio by considering the frequency response of the first audio playback device (e.g., compensating a high-frequency portion of the audio played by the first audio playback device in a case where the high-frequency response of the first audio playback device is insufficient; performing smoothing processing on high-frequency and low-frequency portions of the audio, or the like), audio played through the first audio playback device can achieve high quality across all frequency bands.

According to one or more embodiments of the present disclosure, in a case where the first audio playback device corresponds to a plurality of audio channels, in the audio adjustment P4 process, processing such as mixing, equalization, filtering may also be performed on sound of the plurality of audio channels to improve the quality of audio played by the first audio playback device.

Through the audio adjustment P4, it is made possible to consider characteristics of the first audio playback device when playing the audio by the first audio playback device, thereby playing the audio with high quality.

Similarly, during the audio adjustment P4' process, the second audio playback device may adjust the audio acquisition signal according to characteristics of the second audio playback device, and play the audio based on the adjusted audio acquisition signal, where the characteristics of the second audio playback device include at least one of a frequency response of the second audio playback device and an audio channel corresponding to the second audio playback device (including the number of audio channels, types of audio channels (e.g., high-frequency audio channel, low-frequency audio channel), and the like).

In a case of adjusting the audio by considering the frequency response of the second audio playback device (e.g., compensating a high-frequency portion of the audio played by the second audio playback device in a case where the high-frequency response of the second audio playback device is insufficient; performing smoothing processing on high-frequency and low-frequency portions of the audio played by the first audio playback device, or the like), audio played through the second audio playback device can achieve high quality across all frequency bands.

According to one or more embodiments of the present disclosure, in a case where the second audio playback device corresponds to a plurality of audio channels, in the audio adjustment P4' process, processing such as mixing, equalization, filtering may also be performed on sound of the plurality of audio channels to improve the quality of audio played by the second audio playback device.

Through the audio adjustment P4', it is made possible to consider characteristics of the second audio playback device when playing the audio by the second audio playback device, thereby playing the audio with high quality.

An audio driving module of the first audio playback device may convert a signal obtained after processing of audio synchronization P2 and audio adjustment P4 into audio (that is, audio V2) and output it to the user (that is, audio driving P6 shown in FIG. 3). Optionally, the audio driving module of the first audio playback device may further provide information related to characteristics of the first audio playback device to an audio adjustment module of the first audio playback device, such that the audio adjustment module makes full use of the characteristics of the first audio playback device to enable audio to be played with highest possible quality.

Similarly, an audio driving module of the second audio playback device may convert a signal obtained after processing of audio synchronization P2' and audio adjustment P4' into audio (that is, audio V4) and output it to the user (that is, audio driving P6' shown in FIG. 3). Optionally, the audio driving module of the second audio playback device may further provide information related to characteristics of the second audio playback device to an audio adjustment module of the second audio playback device, such that the audio adjustment module makes full use of the characteristics of the second audio playback device to enable audio to be played with highest possible quality.

It should be understood that the aforementioned processing P100 and processing P100' can be implemented by hardware and/or software, which is not limited herein. When a plurality of audio playback devices can synchronously play audio through the aforementioned processing P100 and processing P100', audio played by the audio playback devices can be ensured to be synchronous, such that the audio playback devices can play audio with their optimal performance, thereby providing a better immersive auditory experience for the user.

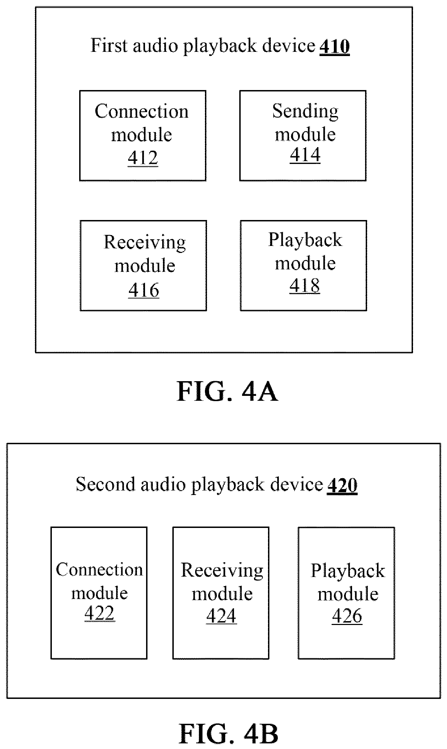

FIG. 4A is a schematic diagram illustrating the composition of a first audio playback device 410 according to one or more embodiments of the present disclosure.

According to one or more embodiments of the present disclosure, the first audio playback device 410 includes a connection module 412, a sending module 414, a receiving module 416, and a playback module 418.

Here, the connection module 412 may be configured to: connect with an audio acquisition device and at least one second audio playback device.

The sending module 414 may be configured to: send connection information of the first audio playback device with the audio acquisition device to the at least one second audio playback device for the at least one second audio playback device to receive, based at least on the connection information, an audio acquisition signal sent by the audio acquisition device.

The receiving module 416 may be configured to: receive the audio acquisition signal sent by the audio acquisition device.

In addition, the playback module 418 may be configured to: play first audio corresponding to the audio acquisition signal synchronously with the at least one second audio playback device.

It should be understood that the first audio playback device 410 in FIG. 4A can implement the method 210 for a first audio playback device described with respect to FIG. 2A, where the connection module 412, the sending module 414, the receiving module 416, and the playback module 418 may be respectively used to implement processing processes described with respect to step S212, step S214, step S216, and step S218, which will not be repeated here.

According to one or more embodiments of the present disclosure, the first audio playback device 410 may be used in the application scenarios described with respect to FIG. 1C or FIG. 1D. That is, the first audio playback device 410 may be the primary audio playback device D2 described in FIG. 1C or FIG. 1D.

FIG. 4B is a schematic diagram illustrating the composition of a second audio playback device 420 according to one or more embodiments of the present disclosure.

According to one or more embodiments of the present disclosure, the second audio playback device 420 includes a connection module 422, a receiving module 424, and a playback module 426.

Among them, the connection module 422 may be configured to: connect with a first audio playback device.

The receiving module 424 may be configured to: receive connection information of the first audio playback device with an audio acquisition device from the first audio playback device; and receive, based at least on the connection information, an audio acquisition signal sent by the audio acquisition device.

The playback module 426 may be configured to: play first audio corresponding to the audio acquisition signal synchronously with the first audio playback device.

It should be understood that the second audio playback device 420 in FIG. 4B can implement the method 220 for a second audio playback device described with respect to FIG. 2B, where the connection module 422 may be used to implement the processing process described with respect to step S222, the receiving module 424 may be used to implement the processing processes described with respect to step S224 and step S226, the playback module 426 may be used to implement the processing process described with respect to step S228, which will not be repeated here.

According to one or more embodiments of the present disclosure, the second audio playback device 420 may be used in the application scenarios described with respect to FIG. 1C or FIG. 1D. That is, the second audio playback device 420 may be the secondary audio playback device D4, D6, D8 or D10 described in FIG. 1C or FIG. 1D.

In general, various example embodiments of the present disclosure may be implemented in hardware or dedicated circuits, software, firmware, logic, or any combination thereof. Certain aspects may be implemented in hardware, whereas other aspects may be implemented in firmware or software that can be executed by a controller, microprocessor or other computing devices. When aspects of one or more embodiments of the present disclosure are illustrated or described as block diagrams, flowcharts or using certain other graphical representations, it will be understood that the blocks, apparatuses, systems, techniques or methods described herein may be implemented as non-limiting examples in hardware, software, firmware, dedicated circuits or logic, general purpose hardware or controllers or other computing devices, or some combination thereof.

According to still another aspect of the present disclosure, a computer-readable storage medium is also provided. The computer storage medium has computer-readable instructions stored thereon. When the computer-readable instructions are run by a processor, the method according to one or more embodiments of the present disclosure described with reference to the above accompanying drawings can be executed. The computer-readable storage medium in one or more embodiments of the present disclosure may be volatile memory or non-volatile memory, or may include both volatile and non-volatile memory. Non-volatile memory may be read-only memory (ROM), programmable read-only memory (PROM), erasable programmable read-only memory (EPROM), electrically erasable programmable read-only memory (EEPROM), or flash memory. Volatile memory may be random access memory (RAM), which functions as external cache memory. By way of exemplary but non-limiting illustration, many forms of RAM are usable, such as static random access memory (SRAM), dynamic random access memory (DRAM), synchronous dynamic random access memory (SDRAM), double data rate synchronous dynamic random access memory (DDRSDRAM), enhanced synchronous dynamic random access memory (ESDRAM), synch link dynamic random access memory (SLDRAM), and direct rambus random access memory (DR RAM). It should be noted that the memory of the methods described herein is intended to include but not be limited to these and any other suitable types of memory. It should be noted that the memory of the methods described herein is intended to include but not be limited to these and any other suitable types of memory.

One or more embodiments of the present disclosure further provide a computer program product or a computer program, where the computer program product or the computer program includes computer instructions stored in a computer-readable storage medium. The processor of the computer device reads the computer instructions from the computer-readable storage medium, and the processor executes the computer instructions, such that the computer device executes the method according to one or more embodiments of the present disclosure.

In summary, the present disclosure provides a method for an audio playback device, an audio playback device, an audio playback system, and a computer-readable storage medium. Among them, a method for a first audio playback device includes: connecting with an audio acquisition device and at least one second audio playback device; sending connection information of the first audio playback device with the audio acquisition device to the at least one second audio playback device for the second audio playback device to receive, based at least on the connection information, an audio acquisition signal sent by the audio acquisition device; receiving the audio acquisition signal sent by the audio acquisition device; and playing first audio corresponding to the audio acquisition signal synchronously with the at least one second audio playback device. A method for a second audio playback device includes: connecting with a first audio playback device; receiving connection information of the first audio playback device with an audio acquisition device from the first audio playback device; receiving, based at least on the connection information, an audio acquisition signal sent by the audio acquisition device; and playing first audio corresponding to the audio acquisition signal synchronously with the first audio playback device.

The method for an audio playback device according to the present disclosure can, for an application scenario where an audio signal is acquired through an audio acquisition device and the acquired audio signal is sent to a plurality of audio playback devices such that audio corresponding to the acquired audio signal is played through the plurality of audio playback devices, reduce delay between sound propagated through air and sound propagated after being processed by the audio acquisition device and the audio playback devices, and ensure synchronization of sound played by the audio playback devices, thereby improving users' auditory experience.

It should be noted that the flowcharts and block diagrams in the accompanying drawings illustrate possible architectures, functions, and operations of systems, methods, and computer program products according to various embodiments of the present disclosure. In this regard, each block in a flowchart or block diagram may represent a module, a program segment, or a portion of code, where the module, the program segment, or the portion of code contains at least one executable instruction for implementing a specified logical function. It should also be noted that, in some alternative implementations, the functions indicated in the blocks may occur in an order different from the order indicated in the drawings. For example, two blocks shown as consecutive may in fact be executed substantially concurrently, or they may sometimes be executed in reverse order, depending on the functions involved. It should also be noted that each block in the block diagram and/or flowchart, as well as combinations of blocks in the block diagram and/or flowchart, may be implemented by a dedicated hardware-based system that performs the specified functions or operations, or by a combination of dedicated hardware and computer instructions.

The present disclosure uses specific words to describe one or more embodiments of the present disclosure. Terms such as "a first/second embodiment," "an embodiment," and/or "some embodiments" mean a certain feature, structure, or characteristic related to at least one embodiment of the present disclosure. Therefore, it should be emphasized and noted that references to "an embodiment" or "one embodiment" or "an alternative embodiment" made two or more times at different locations in this specification do not necessarily refer to the same embodiment. In addition, certain features, structures, or characteristics in one or more embodiments of the present disclosure may be appropriately combined.

In one or more embodiments of the present disclosure, the term "module" or "unit" refers to a computer program or part of a computer program with a predetermined function, which cooperates with other relevant parts to achieve predetermined objectives, and may be fully or partially implemented using software, hardware (such as processing circuitry or memory), or a combination thereof. Similarly, one processor (or a plurality of processors or memories) may be used to implement one or more modules or units. Furthermore, each module or unit may be part of an integrated module or unit containing the functions of that module or unit.

It should be noted that, in the present disclosure, the terms "comprises," "includes," or any variations thereof are intended to cover non-exclusive inclusion, such that a process, method, article, or device that comprises a list of elements not only includes those elements but also includes other elements not explicitly listed, or elements inherent to such a process, method, article, or device. Without further limitation, the element defined by the phrase "comprises a..." does not exclude the presence of additional identical elements in the process, method, article, or device that comprises the element.

In addition, the aforementioned series of processes includes not only processes executed in the time sequence described herein but also processes executed concurrently or separately, rather than in time sequence.

Unless otherwise defined, all terms (including technical and scientific terms) used herein have the same meanings as commonly understood by those of ordinary skill in the art to which the present disclosure belongs. It should also be understood that terms such as those defined in commonly used dictionaries should be interpreted as having meanings consistent with their meanings in the context of the relevant technologies and should not be interpreted in an idealized or overly formal sense, unless explicitly defined herein.

The foregoing is illustrative of the present disclosure and should not be construed as limiting thereof. Although several exemplary embodiments of the present disclosure have been described, those skilled in the art will readily appreciate that many modifications may be made to the exemplary embodiments without departing from the novel teachings and advantages of the present disclosure. Therefore, all such modifications are intended to be included within the scope of the present disclosure as defined by the appended claims. It should be understood that the above is a description of the present disclosure and should not be considered as limited to the specific embodiments disclosed, and modifications to the disclosed embodiments and other embodiments are intended to be included within the scope of the appended claims. The present disclosure is defined by the claims and their equivalents.

## Claims

1. A method for a first audio playback device, comprising:
connecting with an audio acquisition device and at least one second audio playback device;
sending connection information of the first audio playback device with the audio acquisition device to the at least one second audio playback device for the at least one second audio playback device to receive, based at least on the connection information, an audio acquisition signal sent by the audio acquisition device;
receiving the audio acquisition signal sent by the audio acquisition device; and
playing first audio corresponding to the audio acquisition signal synchronously with the at least one second audio playback device.

2. The method of claim 1, further comprising:
obtaining packet guiding information indicating the audio acquisition signal, and sending the packet guiding information to the at least one second audio playback device for the at least one second audio playback device to receive, based on the connection information and the packet guiding information, the audio acquisition signal sent by the audio acquisition device.

3. The method of claim 1 or 2, further comprising:
sending an audio playback instruction to the at least one second audio playback device, wherein the audio playback instruction is used to instruct the at least one second audio playback device to play second audio synchronously with the first audio playback device, wherein the first audio is audio acquired in real time by the audio acquisition device, and the second audio is pre-recorded audio; and
playing the second audio synchronously with the at least one second audio playback device.

4. The method of any preceding claim, wherein playing first audio corresponding to the audio acquisition signal synchronously with the at least one second audio playback device comprises:
adjusting the audio acquisition signal according to characteristics of the first audio playback device, and playing the first audio based on the adjusted audio acquisition signal, wherein the characteristics of the first audio playback device comprise at least one of a frequency response of the first audio playback device or an audio channel corresponding to the first audio playback device.

5. The method of any preceding claim, wherein the first audio playback device and the at least one second audio playback device are evenly arranged in a space, the method further comprising:
obtaining first setup information of the first audio playback device; and
sending the first setup information of the first audio playback device to the at least one second audio playback device for the at least one second audio playback device to determine second setup information of the at least one second audio playback device based on the first setup information.

6. A method for a second audio playback device, comprising:
connecting with a first audio playback device;
receiving connection information of the first audio playback device with an audio acquisition device from the first audio playback device;
receiving, based at least on the connection information, an audio acquisition signal sent by the audio acquisition device; and
playing first audio corresponding to the audio acquisition signal synchronously with the first audio playback device.

7. The method of claim 6, further comprising:
receiving packet guiding information indicating the audio acquisition signal from the first audio playback device,
wherein receiving, based at least on the connection information, an audio acquisition signal sent by the audio acquisition device comprises:
receiving, based on the connection information and the packet guiding information, the audio acquisition signal sent by the audio acquisition device.

8. The method of claim 6 or 7, further comprising:
receiving an audio playback instruction from the first audio playback device, wherein the audio playback instruction is used to instruct the second audio playback device to play second audio synchronously with the first audio playback device, wherein the first audio is audio acquired in real time by the audio acquisition device, and the second audio is pre-recorded audio; and
playing the second audio synchronously with the first audio playback device.

9. The method of any of claims 6 to 8, wherein playing first audio corresponding to the audio acquisition signal synchronously with the first audio playback device comprises:
adjusting the audio acquisition signal according to characteristics of the second audio playback device, and playing the first audio based on the adjusted audio acquisition signal, wherein the characteristics of the second audio playback device comprise at least one of a frequency response of the second audio playback device or an audio channel corresponding to the second audio playback device.

10. The method of any of claims 6 to 9, further comprising:
receiving first setup information of the first audio playback device from the first audio playback device; and
determining second setup information of the second audio playback device based on the first setup information,
wherein playing first audio corresponding to the audio acquisition signal synchronously with the first audio playback device comprises: playing the first audio based on the second setup information.

11. An audio playback system, comprising:
an audio acquisition device;
a first audio playback device; and
at least one second audio playback device,
wherein the first audio playback device is connected to the audio acquisition device and the at least one second audio playback device, and the first audio playback device sends connection information of the first audio playback device with the audio acquisition device to the at least one second audio playback device, such that the second audio playback device receives, based at least on the connection information, an audio acquisition signal sent by the audio acquisition device; and
the first audio playback device plays first audio corresponding to the audio acquisition signal synchronously with the at least one second audio playback device.

12. A computer-readable storage medium having computer-executable instructions stored thereon, wherein the instructions, when executed by a processor, are used to implement the method of any one of claims 1-10.
